(19) Europäisches Patentamt
European Patent Office
Office européen des brevets

(11) **EP 2 692 046 B1**

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(21) Anmeldenummer: **12700007.3**

(22) Anmeldetag: **02.01.2012**

(51) Int Cl.:
*H02M 1/32* (2007.01)   *H02M 7/219* (2006.01)
*H02P 9/48* (2006.01)

(86) Internationale Anmeldenummer:
**PCT/EP2012/050010**

(87) Internationale Veröffentlichungsnummer:
**WO 2012/130479 (04.10.2012 Gazette 2012/40)**

(54) **VERFAHREN ZUM ANSTEUERN EINES GLEICHRICHTERS**

METHOD FOR CONTROLLING A RECTIFIER

DISPOSITIF DE COMMANDE D'UN REDRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011006316**

(43) Veröffentlichungstag der Anmeldung:
**05.02.2014 Patentblatt 2014/06**

(73) Patentinhaber:
• **Robert Bosch GmbH**
**70442 Stuttgart (DE)**
• **SEG Automotive Germany GmbH**
**70499 Stuttgart (DE)**

(72) Erfinder:
• **MEHRINGER, Paul**
**70569 Stuttgart (DE)**

• **SCHILLER, Uwe**
**74372 Sersheim (DE)**
• **HEINISCH, Holger**
**72770 Reutlingen (DE)**
• **BAUR, Markus**
**72108 Rottenburg (DE)**
• **KURFISS, Jochen**
**75417 Lomersheim (DE)**
• **WALTER, Gerhard**
**70839 Gerlingen (DE)**

(56) Entgegenhaltungen:
EP-A2- 0 777 309          DE-A1- 10 260 650
DE-A1-102005 051 004      DE-A1-102007 060 219
DE-A1-102008 036 114      DE-A1-102010 001 713

EP 2 692 046 B1

**Beschreibung**

Die Erfindung betrifft ein Verfahren zum Ansteuern eines Gleichrichters mit aktiven Schaltelementen bei einem Lastabfall, eine Ansteuerschaltung zum Ansteuern eines Gleichrichters mit aktiven Schaltelementen bei einem Lastabfall, einen Gleichrichter mit aktiven Schaltelementen und einen elektrischen Generator.

Stand der Technik

Zur Speisung von Gleichstromsystemen aus Drehstromsystemen, wie bspw. beim öffentlichen Drehstromnetz, werden im allgemeinen Gleichrichter verwendet. Diese Gleichrichter sind meist in Brückenschaltung aufgebaut, wobei Dioden als Gleichrichterelemente dienen. Die Dioden benötigen keine weitere Ansteuerschaltung, da sie selbstständig zum richtigen Zeitpunkt in den leitenden oder sperrenden Zustand übergehen.

Brückengleichrichter werden auch als Gleichrichter in Drehstromgeneratoren für Kraftfahrzeuge verwendet. Die in Diodengleichrichtern umgesetzte Verlustleistung ergibt sich aus dem Dioden-Design und dem gleichzurichtenden Strom. Durch schaltungstechnische Maßnahmen, bspw. durch Parallelschalten von Dioden, lassen sich diese Verluste nur unwesentlich verringern. Werden jedoch die Dioden durch aktive Schalter, z. B. MOSFET-Transistoren, ersetzt, lassen sich diese Verluste wesentlich verkleinern. Der Einsatz von aktiven Schaltern erfordert jedoch eine Steuerung, die die Schalter zum richtigen Zeitpunkt ein- und ausschaltet.

Ein kritischer Betriebszustand eines aktiven Gleichrichters ist der Lastabwurf. Ein Lastabwurf liegt vor, wenn bei erregter Maschine mit abgegebenem Strom das Lastkabel abfällt oder schlagartig Verbraucher abgeschaltet werden. Der Generator liefert für typischerweise 300 bis 500 ms weiter Energie, die im Gleichrichter umgesetzt werden muss, um das Bordnetz vor Schädigungen durch Überspannung zu schützen.

In herkömmlichen Diodengleichrichtern kann diese Verlustenergie in Wärme umgesetzt werden. Dabei bieten die Dioden eine ausreichend gute Aufbau- und Verbindungstechnik mit niedrigen thermischen Impedanzen. Des Weiteren bieten die Zenerdioden den Vorteil, dass die Zenerspannung mit steigender Temperatur steigt. Damit wird über den einzelnen Zweigen eine nahezu Gleichverteilung der Strombelastung der Zweige erreicht. Im thermisch ausgeglichenen Zustand sind die Zenerspannungen aufgrund von Fertigungsschwankungen zunächst nicht identisch. Schaltzweige mit niedrigerer Zenerspannung werden mit mehr Strom belastet. Durch den Anstieg der Zenerspannung mit der Temperatur tritt ein selbsthemmender Effekt ein, der zu einer nahezu Gleichverteilung des Stroms führt.

Bei aktiven Gleichrichtern werden üblicherweise MOSFET-Transistoren als Leistungsschalter verwendet. Bei bekannten Schaltungen zur Spannungsklammerung ist die Klammerspannung von der Schwellspannung der MOSFET-Transistoren abhängig, weshalb die Abnahme der Schwellspannung eine Abnahme der Klammerspannung zur Folge hat. Da die Schwellspannungen von MOSFET-Transistoren negative Temperaturkoeffizienten aufweisen, sinkt die Klammerspannung solcher aktiver Gleichrichter bei Zunahme der Temperatur. Dies bewirkt eine Ungleichverteilung des Stroms mit der Folge einer Ungleichverteilung der Temperatur, was die Ungleichverteilung des Stroms verstärkt und sich als Mitkopplungseffekt zeigt.

Bei bekannten Schaltungen zur Spannungsklammerung setzt sich die Klammerspannung aus der Durchbruchsspannung einer Zenerdiode oder einer Kette aus Zenerdioden und der Schwellspannung des MOSFET-Transistors zusammen. Da die Zenerdioden mit dem MOSFET-Transistor thermisch nicht oder nur unzureichend gekoppelt sind, kann deren positiver Temperaturkoeffizient den negativen Temperaturkoeffizienten der Schwellspannung des MOSFET-Transistors nicht kompensieren.

Aus der Druckschrift WO 2007/048761 A2 ist eine Vorrichtung zur Temperaturkompensation bei einer Endstufe bekannt, bei der die elektrische Leistung während der Klammerphase temperaturkompensiert gleichmäßig auf die unterschiedliche Zenerspannung aufweisenden Einzel-Endstufen verteilt wird.

In der Offenlegungsschrift DE 102 60 650 A1 wird eine Leistungschalteranordnung beschrieben, mit einer Klemmschaltung und einer Regelvorrichtung, die ein von der Temperatur des Leistungschalters abhängiges Stellsignal für die Klemmschaltung erzeugt, so dass beim Abschaltvorgang eine zeitlich veränderliche Klemmspannung vorgegeben wird.

In der Offenlegungsschrift DE 10 2008 036 114 A1 wird ein Halbleiterschalter mit Klemmschaltung beschrieben, wobei die Klemmspannung abhängig von einer Temperaturdifferenz zwischen der lokalen Temperatur des Leistungstransistors und einer Umgebungstemperatur einstellbar ist.

Doe Offenlegungsschrift DE 10 2007 060219 A1 offenbart eine Generatoranordnung mit Gleichrichter für ein Kraftfahrzeug, mit Spannungsklammerung bei Lastabwurf.

Offenbarung der Erfindung

Vor diesem Hintergrund werden ein Verfahren zum Ansteuern eines Gleichrichters mit den Merkmalen des Anspruchs 1, eine Ansteuerschaltung nach Anspruch 9, ein Gleichrichter gemäß Anspruch 11 und ein elektrischer Generator gemäß Anspruch 12 vorgestellt. Ausführungen ergeben sich aus den abhängigen Ansprüchen und der Beschreibung.

Das vorgestellte Verfahren dient dazu, die während der Spannungsklammerung beim Lastabwurf umgesetzte Leistung auf die Leistungstransistoren aller Schaltzweige möglichst gleichmäßig zu verteilen, um eine möglichst homogene Erwärmung der beteiligten Leistungtransistoren zu erreichen. Es stellt somit ein Verfahren zur Gleichverteilung der Verlustleistung bei der Spannungsbegrenzung in Gleichrichtern dar.

Weitere Vorteile und Ausgestaltungen der Erfindung ergeben sich aus den beigefügten Zeichnungen und der Beschreibung.

Es versteht sich, dass die voranstehend genannten und die nachstehend noch zu erläuternden Merkmale nicht nur in der jeweils angegebenen Kombination, sondern auch in anderen Kombinationen oder auch in Alleinstellung verwendbar sind.

Kurze Beschreibung der Zeichnungen

Figur 1     zeigt eine Ausführungsform des vorgestellten Gleichrichters mit aktiven Schaltern.

Figur 2     zeigt die Strompfade bei dem vorgestellten Gleichrichter bei einem Lastabwurf.

Figur 3     zeigt einen Aufbau einer Klammerschaltung zur Behandlung eines Lastabwurfs.

Figur 4     zeigt in einem Graphen die Abhängigkeit der Schwellspannung eines Feldeffekttransistors von der Temperatur.

Figur 5     zeigt in einem Graphen die Abhängigkeit der Avalanche-Durchbruchspannung von der Temperatur.

Figur 6     zeigt in einem Graphen den Verlauf von drei Phasenspannungen im Lastabwurf gemäß dem Stand der Technik.

Figur 7     zeigt in einem Graphen den angestrebten Verlauf einer Phasenspannung im Lastabwurf.

Figur 8     zeigt in einem Graphen den angestrebten Verlauf der Phasenspannungen im Lastabwurf.

Figur 9     zeigt in einem Graphen den simulierten Temperaturverlauf an drei MOSFET-Transistoren gemäß Stand der Technik.

Figur 10     zeigt in einem Graphen den Temperaturverlauf an drei MOSFET-Transistoren nach Einführung von erfindungsgemäßen Verbesserungen.

Figur 11     zeigt in einem Graphen den Verlauf der Gate-Source-Spannung nach Einführung von erfindungsgemäßen Verbesserungen.

Figur 12     zeigt einen Schichtaufbau bei getrennter Logik.

Figur 13     zeigt den Schichtaufbau mit im MOSFET-Transistor integrierter Zenerdiode.

Figur 14     zeigt in einem Graphen den Temperaturverlauf von fünf MOSFET-Transistoren mit im MOSFET-Transistor integrierter Zenerdiode.

Figur 15     zeigt alternative Beschreibungen eines vierpoligen MOSFET-Transistors.

Figur 16     zeigt in einem Prinzipschaltbild eine Drain-Source-Regelung.

Figur 17     zeigt in einem Graphen die Temperaturverteilung mit Drain-Gate-Regelung.

Figur 18     zeigt in einem Graphen die Temperaturverteilung mit Drain-Source-Regelung.

Ausführungsformen der Erfindung

Die Erfindung ist anhand von Ausführungsformen in den Zeichnungen schematisch dargestellt und wird nachfolgend unter Bezugnahme der Zeichnungen ausführlich beschrieben. Die Methode der Erfindung wird im Folgenden anhand eines 3-phasigen Systems beschrieben, ist aber ohne Weiteres auf mehrphasige Systeme übertragbar.

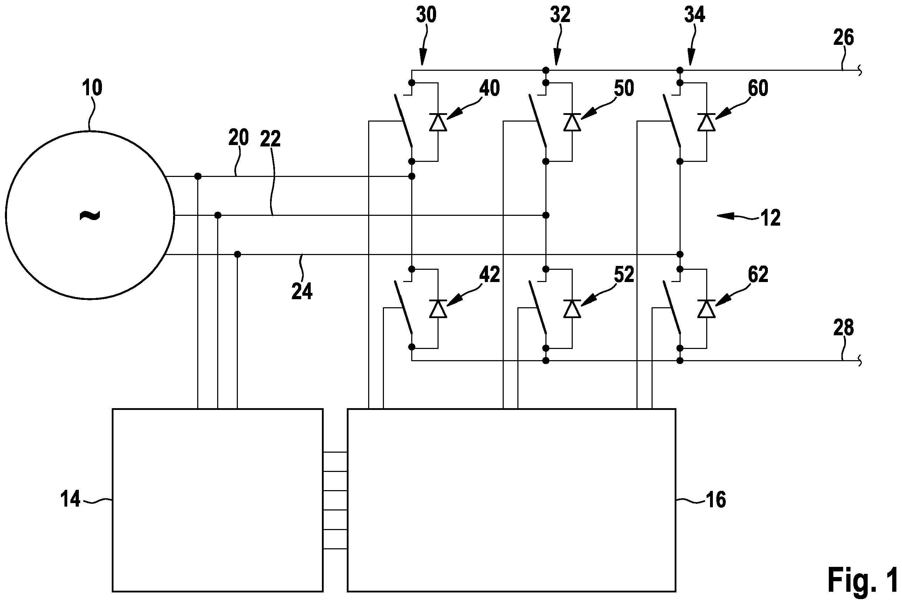

In Figur 1 ist ein Generator 10, ein Gleichrichter 12, in diesem Fall ein Brückengleichrichter, eine Ansteuerschaltung 14 zur Erzeugung von Ansteuersignalen und eine Ansteuerung 16 von Schaltern (z. B. Gatetreiber) dargestellt.

Der Generator 10 erzeugt drei Phasensignale, nämlich Phase U 20, Phase V 22 und Phase W 24. Diese drei Phasen 20, 22 und 24 werden in den Gleichrichter 12 eingespeist, in dem zwischen einem Pluspol 26 und einem Minuspol 28 in einem ersten Zweig 30, einem zweiten Zweig 32 und einem dritten Zweig 34 Schaltelemente angeordnet sind.

Dabei umfasst der erste Zweig 30 ein erstes Schaltelement 40 und ein zweites Schaltelement 42, der zweite Zweig 32 ein drittes Schaltelement 50 und ein viertes Schaltelement 52 und der dritte Zweig 34 ein fünftes Schaltelement 60 und ein sechstes Schaltelement 62. Die Schaltelemente 40, 42, 50, 52, 60, 62 umfassen jeweils einen Schalter mit parallel geschalteter Diode und können als MOSFET-Transistoren, jeweils mit Source-, Drain- und Gate-Anschluss, ausgebildet sein.

Die drei Phasen U 20, V 22 und W 24 werden durch den Gleichrichter 12 in Gleichgrößen gewandelt.

Die Schaltung 14 zur Erzeugung der Ansteuersignale wertet die drei Phasen 20, 22 und 24 aus und erzeugt Steuersignale, mit denen die Ansteuerung 16 für die Schalter der Schaltelemente 40, 42, 50, 52, 60, und 62 erfolgt.

Die Einschaltbedingungen der aktiven Schalter erfolgt über eine Auswertung der Spannung an den Dioden bzw. Inversdioden der MOSFET-Transistoren. Bei einer Flussspannung von typischerweise 0,7 V ist eine sichere Detektion der Einschaltbedingung mit einem Grenzwert von bspw. 0,35 V möglich. Sobald die Ansteuerung erfolgt ist, bricht dieses Signal ein, da die Diodenflussspannung durch den RDS_ON des MOSFET überbrückt wird. Daher ist eine Spannungsmessung zur Ermittlung des Ausschaltzeitpunkts problematisch.

Es ist zu beachten, dass ein deutlich höheres Signal durch eine verlustfreie Strommessung erreicht werden kann. Von Bedeutung ist die Verlustfreiheit der Spannungsmessung, da durch Einführung eines Shunts der Wirkungsgradgewinn zunichte gemacht werden würde.

Eine Ansteuerung auf Basis einer Spannungsmessung ist gegenüber einer Ansteuerung auf Basis einer Strommessung vorteilhaft, da auf diese Weise der Wirkungsgrad optimal ausgenutzt werden kann.

In Figur 1 ist ein prinzipieller Aufbau für einen aktiven Gleichrichter dargestellt. Die genaue Ausführung der Ansteuerschaltung 14 wird in diesem Zusammenhang nicht näher erläutert.

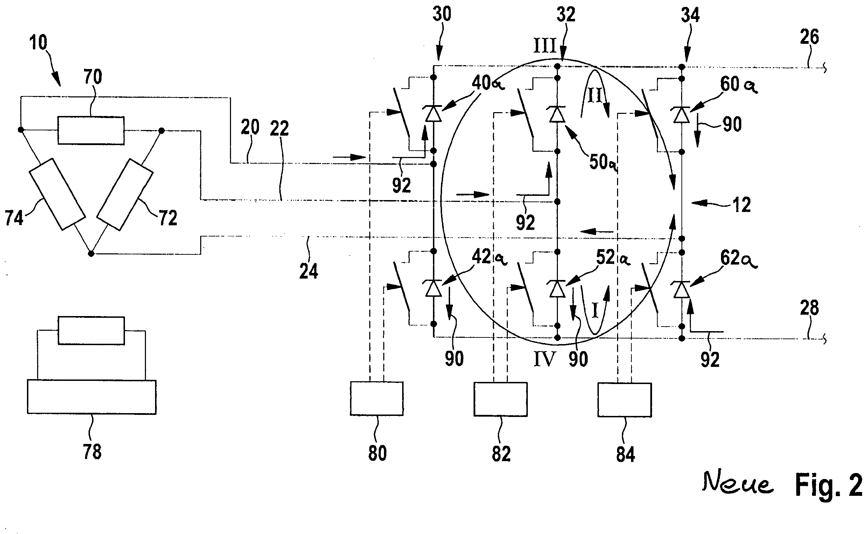

In Figur 2 ist der Schaltungsaufbau ähnlich Figur 1 mit den sich ergebenden Strompfaden dargestellt. Die Schalter der Schaltelemente tragen die Bezugszeichen 40a, 42a, 50a, 52a, 60a, und 62a. Dabei ist der Generator 10 mit drei Statorwicklungen 70, 72 und 74 dargestellt. Weiterhin zeigt die Darstellung einen Regler 78, eine erste Steuerung 80, eine zweite Steuerung 82 und eine dritte Steuerung 84.

Bei einem Lastabwurf ergeben sich die Strompfade gemäß Figur 2. In diesem Fall ist beispielhaft ein Zeitpunkt gewählt mit einem positiven Strom aus den Phasen U 20 und V 22 sowie einem negativen Strom in der Phase W 24. Der überschüssige Strom aus Phase V 22 hat nunmehr zwei mögliche Strompfade, um zur Phase W 24 zu gelangen, und zwar entweder über das Schaltelement 50a (High-Side V) und das Schaltelement 60a (High-Side W), das entspricht dem Pfad II, oder über das Schaltelement 52a (Low-Side V) und das Schaltelement 62a (Low-Side W), das entspricht dem Pfad I.

Beide Strompfade beginnen beim Phasenanschluss V und enden am Phasenanschluss W. Dies gilt auch für die Pfade III und IV mit den Phasen U und W. Damit verhalten sich die Pfade nach außen hin gleichwertig und der Strom wird den Pfad mit der niedrigeren Gegenspannung einnehmen. Da nun die mit schraffierten Pfeilen 90 markierten Klammerspannungen um eine Zehnerordnung höher sind als die mit weiteren Pfeilen 92 markierten Durchflussspannungen, werden die auftretenden Gegenspannungen durch die Zenerspannungen dominiert und der Strom wird den Pfad mit der niedrigeren Klammerspannung wählen.

Dieser Effekt kombiniert mit dem im folgenden beschriebenen negativen Temperaturkoeffizienten (TK) führt zu einer ungleichmäßigen Belastung der Endstufen, wobei sich die Ungleichmäßigkeit im Laufe des Lastabfalls durch einen eintretenden Mitkopplungseffekt verstärkt.

Um eine Gleichverteilung der Energie eines Lastabwurfs auf die im vorliegenden Beispiel beteiligten sechs Schalter im aktiven Gleichrichter zu erzeugen, muss der negative Temperaturkoeffizient der Schwellspannung der MOSFET-Transistoren durch eine geeignete Gegenmaßnahme kompensiert werden.

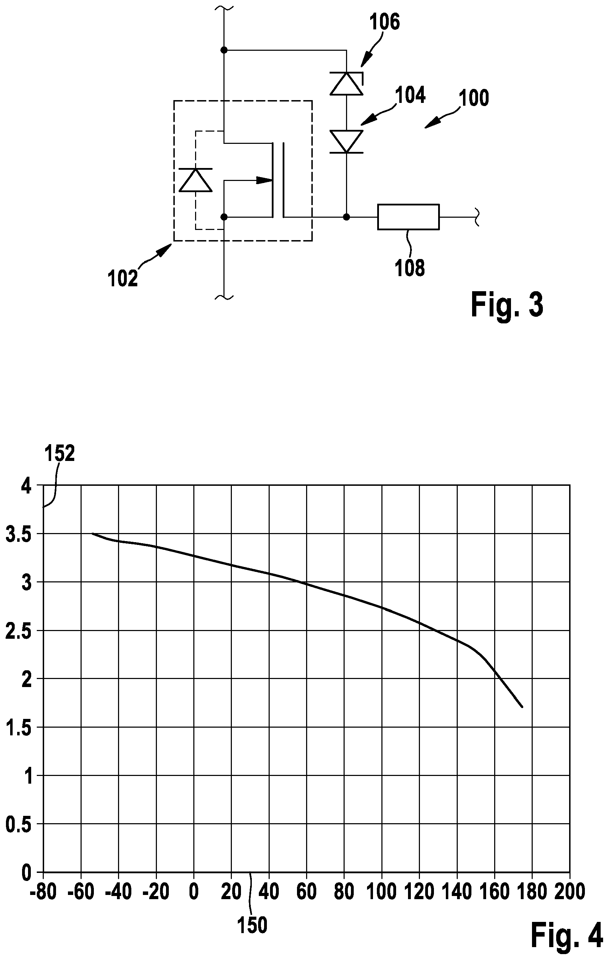

In Figur 3 ist ein typischer Aufbau einer Klammerschaltung zur Behandlung eines Lastabwurfs dargestellt, die insgesamt mit der Bezugsziffer 100 bezeichnet ist. Diese umfasst einen MOSFET-Transistor 102, eine Diode 104, eine Zenerdiode 106 und einen Widerstand 108.

Für den in Figur 3 gezeigten Aufbau ergibt sich zwischen Drain und Source die Klammerspannung U_DS:

$$U\_DS = U\_Z + U\_GS$$

Da der MOSFET-Transistor 102 an einem Arbeitspunkt mit einer sehr steilen Kennlinie betrieben wird, wirken sich hier kleine Änderungen in der Schwellspannung sehr deutlich stark auf den Drainstrom des MOSFET-Transistors aus.

Figur 4 zeigt in einem Graphen die Abhängigkeit der Schwellspannung von der Temperatur für einen kleinen Drain- Sättigungsstrom. Dabei ist an einer Abszisse 150 die Temperatur in °C und an einer Ordinate 152 die Schwellspannung in V aufgetragen.

Figur 4 verdeutlicht somit die Abhängigkeit der Schwellspannung von der Temperatur. Da die Schwellspannungen von MOSFET-Transistoren negative Temperaturkoeffizienten aufweisen, sinkt die Klammerspannung solcher Schaltungen bei Zunahme der Temperatur. Dies bewirkt eine ungleichmäßige Strombelastung der Schaltzweige mit der Folge einer ungleichmäßigen Temperaturverteilung, was sich als Mitkopplungseffekt zeigt und die thermische Überlastung einzelner MOSFET-Transistoren zur Folge haben kann.

Bei Gleichrichterdioden passiver Gleichrichter dominiert im Sperrbetrieb der Avalancheeffekt, weshalb diese Dioden positive Temperaturkoeffizienten der Durchbruchsspannung aufweisen. Bei passiven Gleichrichtern verteilt sich deshalb die bei der Spannungsklammerung umgesetzte Verlustleistung nahezu gleichmäßig auf die beteiligten Zweige.

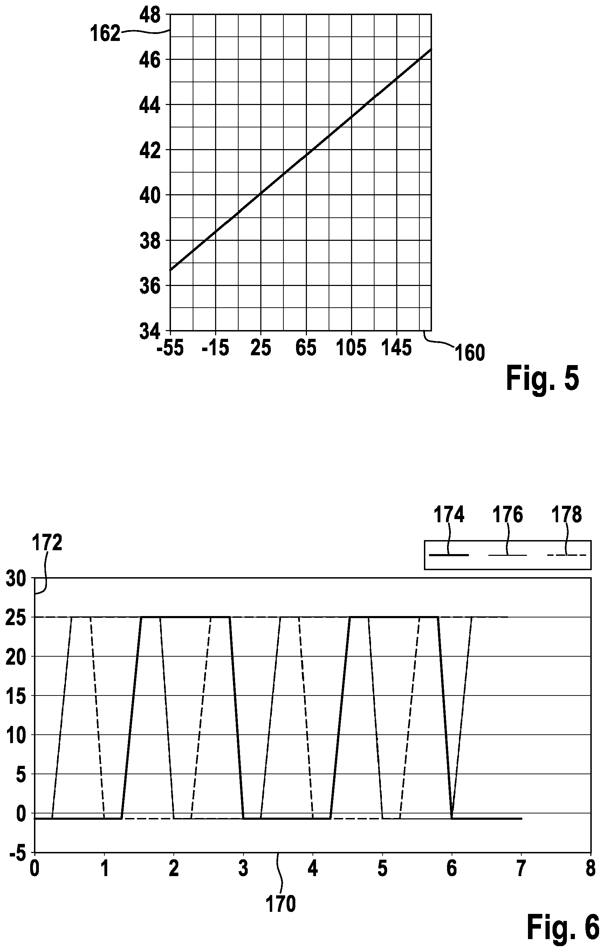

In Figur 5 ist die Abhängigkeit der Avalanche-Durchbruchspannung von der Temperatur, in diesem Fall am Beispiel eines MOSFET-Transistors, wiedergegeben. Dabei ist an einer Abszisse 160 die Temperatur in °C und an einer Ordinate 162 die Durchbruchspannung in V aufgetragen.

Es ist zu beachten, dass bei Generatoren für Kraftfahrzeuge Zeitdauern von ca. 200 ms bis 500 ms benötigt werden, um in einem Lastabwurf-Ereignis den Erregerstrom abzubauen. Entsprechende Zeitdauern gelten deshalb für den Klammerbetrieb der Gleichrichter in einem Lastabwurf-Ereignis.

Bei dem vorgestellten Verfahren ist nunmehr vorgesehen, den Effekt der ansteigenden Klammerspannung in einer deutlich niedrigeren Zeitskala zeitgesteuert ablaufen zu lassen. Dabei wird ausgenutzt, dass ein Lastabwurf aus wiederkehrenden Ereignissen ähnlich Sinushalbwellen im Zeitverlauf besteht. Die Frequenz der Sinushalbwellen ist dabei abhängig von der Polpaarzahl der aktuellen Drehzahl der verwendeten elektrischen Maschine. Nun soll innerhalb jeder einzelnen Sinushalbwelle die Klammerspannung auf einem festgelegten Niveau starten und bspw. innerhalb einer Millisekunde um 2 V ansteigen.

In Figur 6 ist der Verlauf der drei Phasenspannungen im Lastabwurf-Ereignis für ein dreiphasiges System gemäß dem Stand der Technik dargestellt. Dabei ist an einer Abszisse 170 die Zeit in ms aufgetragen. An einer Ordinate 172 ist die Spannung in V aufgetragen. Die Darstellung zeigt somit beispielhaft die Verläufe der Spannungen der Phasen U 174, V 176 und W 178 für ein Lastabwurf-Ereignis gemäß dem Stand der Technik.

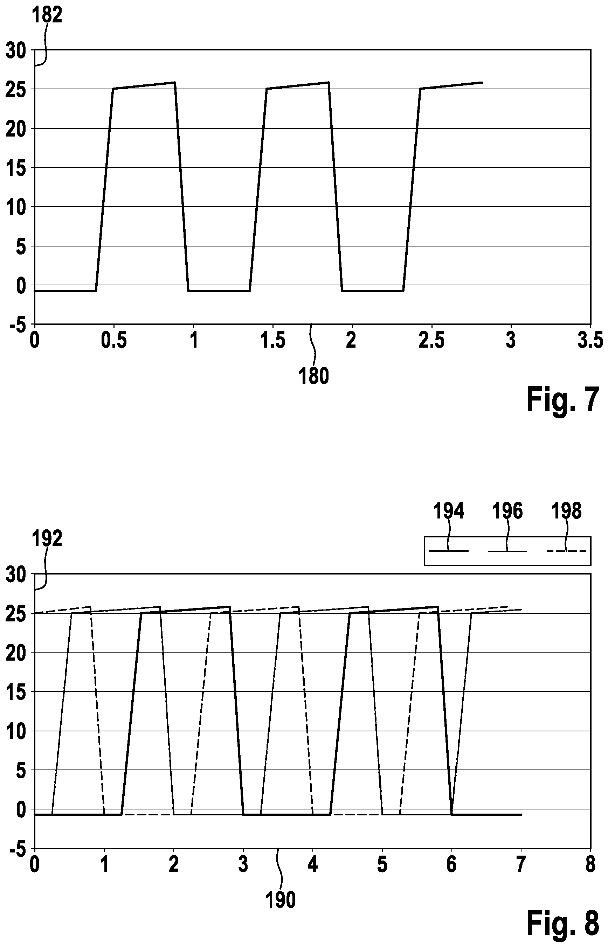

Figur 7 zeigt einen angestrebten Verlauf einer Schaltzweigspannung für ein Lastabwurf-Ereignis. An einer Abszisse 180 ist dabei die Zeit in ms und an einer Ordinate 182 die Phasenspannung in V aufgetragen. Es wird somit ein kontinuierlich steigender Verlauf der Klammerspannung vorgegeben.

Figur 8 zeigt einen angestrebten Verlauf der Schaltzweigspannungen für ein Lastabwurf-Ereignis in einem dreiphasigen System. Wiederum ist an einer Abszisse 190 die Zeit in ms und an einer Ordinate 192 die Spannung an drei Schaltzweigen in V aufgetragen. Die Darstellung zeigt beispielhaft die Verläufe der Spannungen an den Lowside Schaltzweigen der Phasen U 194, V 196 und W 198. Für die Highside Schaltzweige wird der gleiche Spannungsverlauf benötigt.

Figuren 7 und 8 verdeutlichen das vorgestellte Verfahren. Durch die rampenförmige Änderung der Klammerspannung in jedem Schaltzweig innerhalb jeder Halbwelle der Spannungsklammerung unterscheiden sich die Klammerspannungen jedes Schaltzweiges zu jedem Zeitpunkt deutlich. Damit wird erreicht, dass ein hoher Anteil des Stromes immer über den Schaltzweig mit der momentan niedrigsten Klammerspannung geführt wird. Mit diesem Verfahren ergibt sich im zeitlichen Mittel über mehrere Perioden des Phasenstromes nahezu eine Gleichverteilung der Verlustleistung über die Schaltzweige hinweg.

Es ist darauf zu achten, dass der Anstieg der Klammerspannung hoch genug gewählt wird, um den Abfall der Schwellspannung über der Temperatur kompensieren zu können.

Vorteile gegenüber dem Stand der Technik sind:

- die weitgehende Gleichverteilung der Verlustleistung während der Spannungsklammerung in einem Lastabwurf-Ereignis,

- die Vermeidung des Avalanche-Betriebs von MOSFET-Transistoren im Lastabwurf-Ereignis,

- die Aufrechterhaltung der Spannungsversorgung im Lastabwurf-Ereignis,

- der Verzicht auf komplexe Leistungshalbleitertechnologien mit thermisch gekoppelten, integrierten Zenerdioden oder integrierten Temperatursensoren,

- die Vermeidung eines Anstiegs der Klammerspannung innerhalb eines Lastabwurf-Ereignisses.

Bei der Darstellung einer Schaltung zur Spannungsklammerung aus einem MOSFET und Zenerdioden entsprechend der Figur 3, besteht beispielsweise die Möglichkeit, die Zenerdioden als Bestandteil eines ASICs zusammen mit dem MOSFET auf einem Baugruppenträger zu platzieren. Bei der Platzierung des ASICs im Abstand von ca. 1 cm zum MOSFET auf einem Direct Bonded Copper (DBC) Baugruppenträger ergibt sich während eines Load Dump Lastabwurf-Ereignisses dynamisch eine relativ hohe Temperaturdifferenz zwischen MOSFET und ASIC. Auf Grund dieser Temperaturdifferenz ist es unter den genannten Bedingungen nicht möglich, den negativen Temperaturkoeffizienten der MOSFET-Schwellspannung durch den positiven Temperaturkoeffizienten der im ASIC integrierten Zenerdioden zu kompensieren.

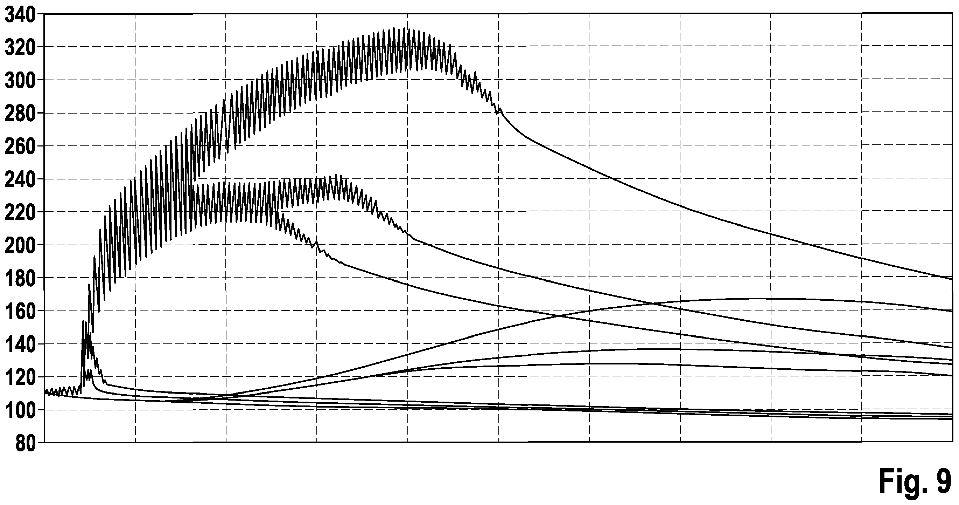

Figur 9 zeigt dazu den simulierten Temperaturverlauf am MOSFET bzw. ASIC bei räumlicher Entfernung von in etwa 1 cm. Dabei ist an einer Abszisse 200 die Zeit in ms und an einer Ordinate 202 die Temperatur aufgetragen. Man erkennt, dass die simulierte Temperatur von einem der sechs MOSFET-Transistoren sich gegenüber den anderen Temperaturen ,abkoppelt' und infolge des Mitkopplungseffektes die Temperaturen auf sich vereinigt. In der vorliegenden Simulation würde einer der sechs Schaltzweige eine Erwärmung um - 200K erfahren, während andere Schaltzweige erst nach Abschluss des Lastabfalls durch Temperaturausgleich um 60K erwärmt werden.

Implementiert man nun die vorstehend erläuterte Algorithmik in den ASIC, so werden im Mittel gesehen die MOSFET-Transistoren relativ symmetrisch belastet. Die Temperaturdifferenz der einzelnen FETs ist deutlich geringer. Der heißeste MOSFET-Transistor erfährt gemäß Simulation eine Erwärmung um 90K der kühlste eine Erwärmung um 50K. Folglich kommt es zu keiner extremen Überlastung von einzelnen Schaltzweigen wie bei Figur 9.

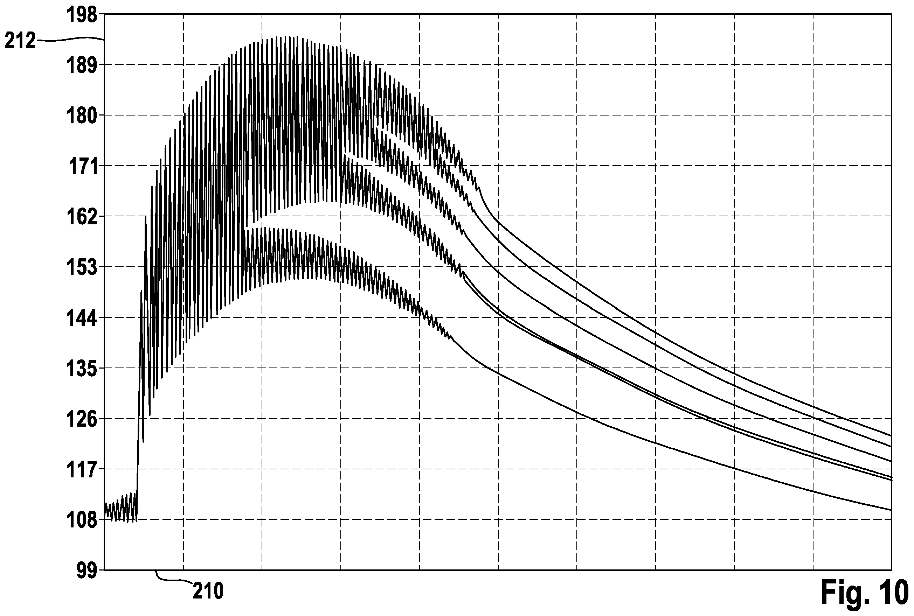

In Figur 10 ist der Temperaturverlauf im MOSFET-Transistor bei der vorstehenden Algorithmik dargestellt. Dabei ist an einer Abszisse 210 die Zeit in ms und an einer Ordinate 212 die Temperatur aufgetragen.

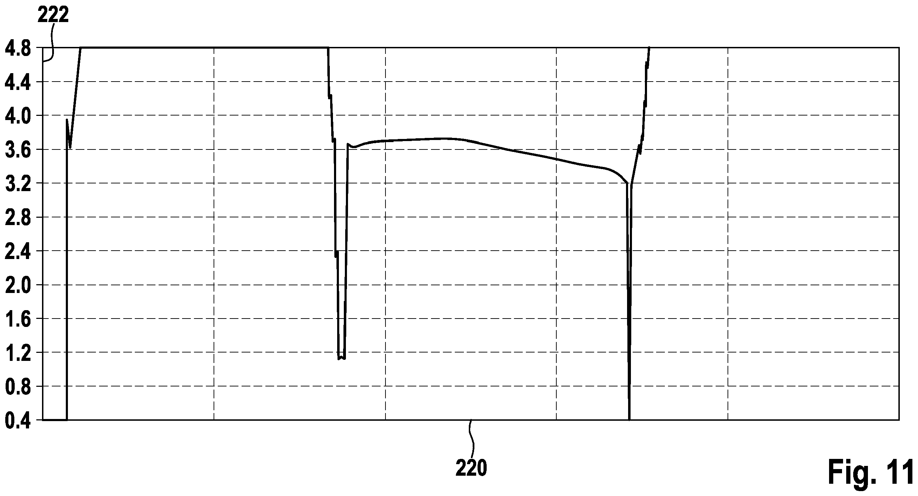

Die vorgestellte Algorithmik ist durch einen negativen Spannungsverlauf am Gate des MOSFET-Transistors zu erkennen, wie dies bspw. in Figur 11 dargestellt. Diese Figur zeigt den Verlauf von UGS am MOSFET-Transistor. Dabei ist an einer Abszisse 220 die Zeit in ms und an einer Ordinate 222 die Spannung in V aufgetragen.

Durch den negativen Spannungsverlauf wird erreicht, dass jeder MOSFET-Transistor zu Beginn einer Halbwelle durch die hohe Ansteuerspannung die größte Energie aufnimmt und im Verlauf des Pulses durch Reduzieren der Ansteuerspannung seinen Kanal weiter abschnürt und folglich durch den erhöhten Widerstand eine sinkende Energieaufnahme bewirkt.

Dieser Effekt lässt sich alternativ auch am geschlossenen Steuergerät zwischen einer beliebigen Phase und Bat+ oder Bat- messen. Im Klammerbetrieb mit konstantem Klammerstrom ist der zeitabhängige Anstieg der Klammerspannung messbar. Die Messung sollte vorzugsweise mit niedrigen Strömen, also ohne nennenswerten Leistungseintrag, erfolgen, um sicherzustellen, dass die gemessene Klammerspannung nicht durch Temperatureffekte beeinflusst wird. Die Messung kann am stehenden Generator im Labor erfolgen durch Eintrag eines externen Klammerstroms in einen beliebigen Schaltzweig.

Das zu erwartende Ergebnis ist in Figur 7 gezeigt.

Alternativ oder additiv zu dem vorstehend vorgestellten Verfahren kann das Problem der gleichmäßigen Verlustleitungsverteilung im Lastabwurf-Ereignis durch die monolithische Integration der für die Ansteuerung des MOSFET-Transistors erforderlichen Zenerdiode entsprechend Figur 3 in einen Leistungsschalter verbessert werden.

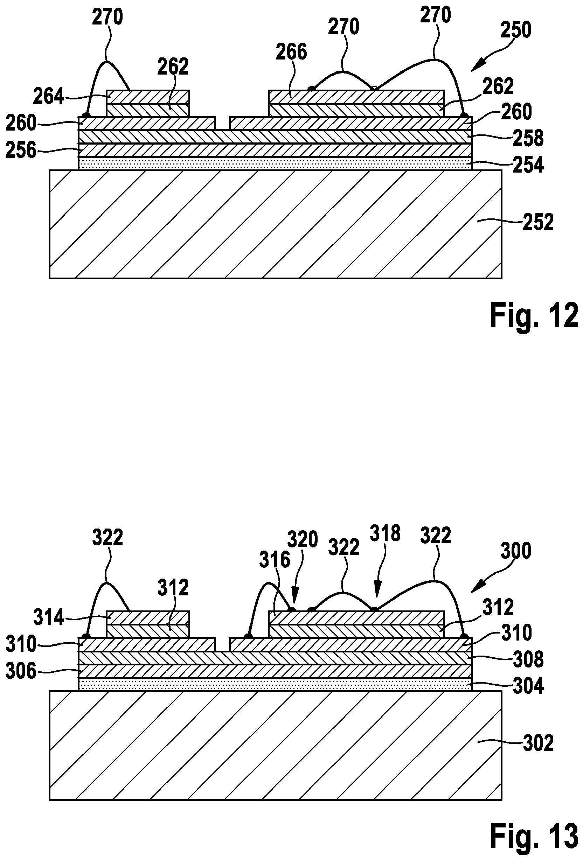

In Figur 12 ist ein Schichtaufbau 250 bei getrennter Logik auf DBC (direct bonded copper) wiedergegeben. Die Darstellung zeigt eine Grundplatte 252, eine erste Schicht 254 einer Wärmeleitpaste (WLP), eine zweite Schicht 256 aus Kupfer, eine dritte Schicht 258 aus $Al_2O_3$, vierte Schichten 260 aus Kupfer, fünfte Schichten 262 Lot und eine Schicht 264 Silizium für den ASIC und eine Schicht 266 Silizium für den MOSFET. Weiterhin sind Bond-Verbindungen 270 dargestellt.

Integriert man die Zenerdiode in die Ansteuerschaltung, so dass sie von dem MOSFET-Transistor eine räumliche Trennung aufweist, so ist der Temperaturfluss vom MOSFET-Transistor, der sich im Load Dump-Fall deutlich erwärmt, bis zur Zenerdiode zeitlich verzögert. Diese Verzögerung liegt in einem Bereich von ca. 100 ms bei dem in Figur 12 gezeigten DBC-Aufbau. Dadurch überwiegt im Load Dump-Fall der negative Temperaturkoeffizient des MOSFET-Transistors. Eine Symmetrierung ist hier nicht möglich. Der Puls wird auf drei MOSFET-Transistoren konzentriert, wobei ein MOSFET-Transistor die größte Energie aufgrund seiner geringsten Schwellenspannung (Mitkopplungseffekt) aufnimmt. Die maximale Temperatur am MOSFET-Transistor erreicht 330 °C. Bei dem vorgestellten Verfahren ist nunmehr in Ausgestaltung vorgesehen, eine Symmetrierung der Ströme auf die einzelnen MOSFET-Transistoren durch einen, auf Gesamtsicht betrachtet, positiven Temperaturkoeffizienten zu erhalten. Dies wird dadurch realisiert, dass in den MOSFET-Transistoren eine Zenerdiode implementiert wird, bei der, wie in Figur 12 dargestellt ist, die Kathode mit Drain des MOSFET-Transistors verbunden ist. Die Anode wird auf ein separates Pad des MOSFET-Transistors geführt und wird elektrisch mit der Ansteuerschaltung verbunden. Dadurch besteht eine direkte thermische Verbindung zwischen dem MOSFET-Transistor und der Zenerdiode, wie in Figur 13 dargestellt ist.

Figur 13 zeigt einen Schichtaufbau 300 mit im MOSFET-Transistor integrierter Zenerdiode. Die Darstellung zeigt eine Grundplatte 302, eine erste Schicht 304 einer Wärmeleitpaste (WLP), eine zweite Schicht 306 aus Kupfer, eine dritte Schicht 308 aus $Al_2O_3$, vierte Schichten 310 aus Kupfer, fünfte Schichten 312 Lot und eine Schicht 314 Silizium für den ASIC und eine Schicht 316 Silizium, eingeteilt in einen ersten Bereich 318 für den MOSFET-Transistor und einen zweiten Bereich 320 für die Zenerdiode. Weiterhin sind Bond-Verbindungen 312 dargestellt.

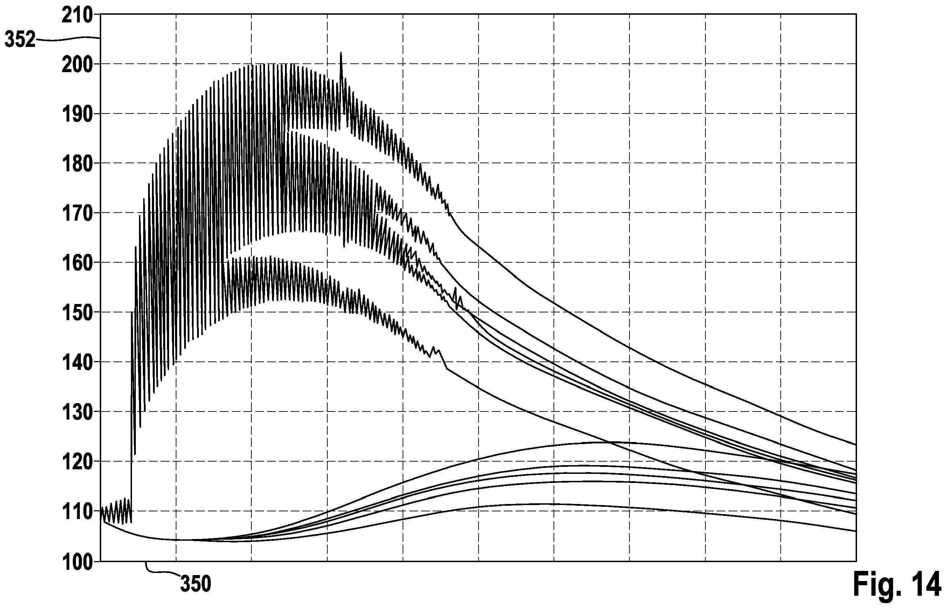

Der negative Temperaturkoeffizient der Schwellspannung des MOSFET-Transistors wird durch den positiven Temperaturkoeffizienten der Zenerdiode von beispielsweise -14 mV/K überkompensiert. Dadurch entsteht ein Effekt der Gegenkopplung, was die annähernde Gleichverteilung der Verlustleistung während Spannungsklammerung im Lastabwurf-Ereignis bewirkt. Die Maximaltemperatur der MOSFET-Transistoren wird hierdurch nach Simulation, wie dies in Figur 14 dargestellt ist, auf 200 °C reduziert.

Grundsätzlich wird die Gleichverteilung der Verlustleistung somit durch thermische Kopplung eines Leistungshalbleiters und einer Zenerdiode bewirkt.

Figur 14 zeigt einen simulierten Temperaturverlauf von Gleichrichterelementen bestehend aus MOSFET-Transistoren mit integrierten Zenerdioden für ein Lastabwurf-Ereignis. Dabei ist an einer Abszisse 350 die Zeit in ms und an einer Ordinate 352 die Temperatur aufgetragen.

Im Vergleich zu Figur 9 ist hier wiederum eine deutlich bessere Gleichverteilung der Verlustleistung und infolge dessen eine homogenere Erwärmung der Schaltzweige erkennbar.

Die Vorteile gegenüber passiven Diodengleichrichtern sind dadurch gegeben, dass die Klammerspannung nicht über der gesamten Load Dump-Zeit nach oben weg driftet, dass die Klammerspannung enger tolerierbar als bei passiven Gleichrichtern ist, da in der beteiligten Zenerdiode kaum Strom fließt, und dass im Gleichrichterbetrieb eine geringere Verlustleistung besteht.

Vorteile gegenüber dem Stand der Technik sind:

- die weitgehende Gleichverteilung der Verlustleistung während der Spannungsklammerung in einem Lastabwurf-Ereignis allgemein und speziell auch für die Parallelschaltung von Gleichrichterelementen,

- die Vermeidung des Avalanche-Betriebs von MOSFET-Transistoren im Lastabwurf-Ereignis,

- die Aufrechterhaltung der Spannungsversorgung im Lastabwurf-Ereignis.

Bei der Darstellung einer Schaltung zur Spannungsklammerung aus einem MOSFET-Transistor und einer Zenerdiode entsprechend der Figur 3, mit monolithischer Integration des MOSFET-Transistors und der Zenerdiode, sind die Leckströme des MOSFET-Transistors messbar, falls der Anodenanschluss der Zenerdiode nicht direkt mit dem Gate des MOSFET-Transistors verbunden wird. In diesem Fall ist es erforderlich, den Anodenanschluss der Zenerdiode nachträglich über eine Bondverbindung mit dem Gateanschluss des MOSFET-Transistors zu verbinden. Diese Verbindung kann auch indirekt über eine separate, nicht im Leistungschip integrierte Schaltung wie beispielsweise einem steuernden ASIC erfolgen. Leckstrommessungen am MOSFET-Transistor können je nach Anforderungen zur Sicherstellung von Funktion und Zuverlässigkeit innerhalb des Herstellungsablaufs notwendig sein.

In einer weiteren Ausführungsform bei der monolithischen Integration des MOSFET-Transistor und der Zenerdiode kann die Anode der Zenerdiode direkt als Bestandteil der Integration mit dem Gate des MOSFET-Transistor verbunden werden.

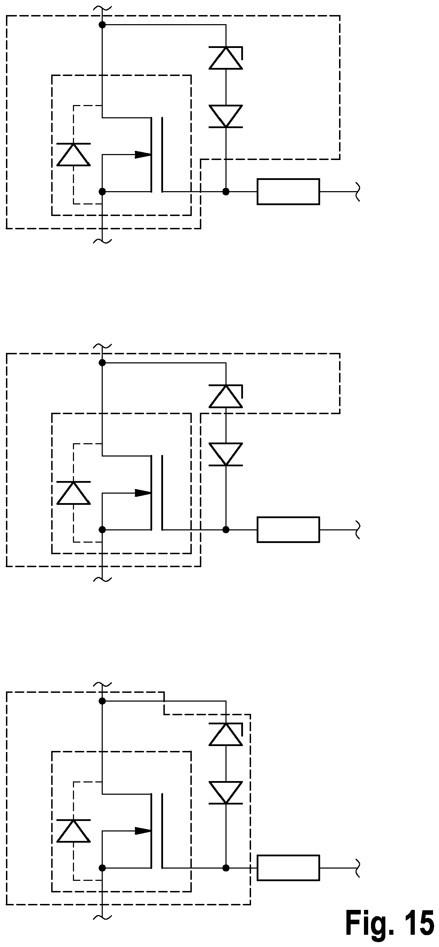

Figur 15 zeigt in Zusammenhang mit der monolithischen Integration des MOSFET-Transistors und der Zenerdiode alternative Verschaltungsmöglichkeiten.

Es wurden vorstehend zwei Verfahren beschrieben, mit deren Anwendung es möglich ist, eine näherungsweise Gleichverteilung in den Gleichrichterelementen während der Spannungsklammerung umgesetzten Verlustleistungen zu erreichen. Nachfolgend ist ein weiteres Verfahren aufgezeigt, das alternativ oder in Kombination angewendet werden kann.

In Figur 3 ist ein einfacher Regelkreis beschrieben, der eine Regelung der Klammerspannung aufweist. Die Führungsgröße dieses Regelkreises setzt sich überwiegend aus der Durchbruchsspannung der Zenerdiode und der Schwellspannung des MOSFET-Transistors zusammen. Für den Fall, dass die Zenerdiode und der MOSFET-Transistor nicht monolithisch integriert sind und deswegen eine vergleichsweise geringe thermische Kopplung zwischen diesen Komponenten existiert, kann der negative Temperaturkoeffizient der Schwellspannung des MOSFET-Transistors nicht durch den positiven Temperaturkoeffizienten der Zenerdiode kompensiert werden, um wie vorausgehend beschrieben den Mitkoppeleffekt zu unterdrücken.

Es wird nachfolgend ein verbessertes Verfahren zur Regelung der Klammerspannung beschrieben, welches den Einfluss des negativen Temperaturkoeffizienten der Schwellspannung des MOSFET-Transistors deutlich unterdrückt.

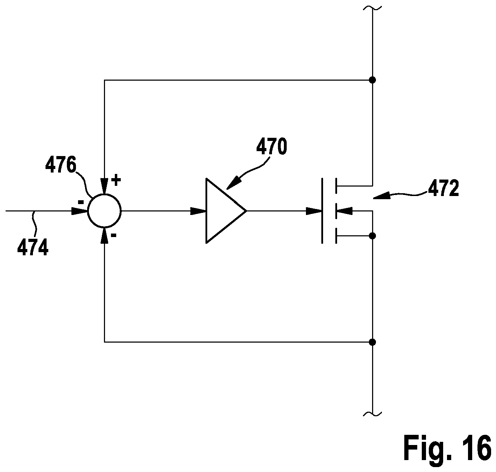

Figur 16 zeigt beispielhaft ein Prinzipschaltbild zur Veranschaulichung des verbesserten Verfahrens zur Regelung der Klammerspannung. Der dargestellte Regler beinhaltet einen Verstärker 470 und einen MOSFET-Transistor 472 sowie ein Summierglied 476. Die Spannung U_Soll 474 dient als Führungsgröße. Durch die Wirkung des Regelkreises wird die Drain-Source-Spannung des MOSFET-Transistors 472 nahezu auf die Spannung U_Soll ausgeregelt. Die Abweichung zwischen der Drain-Source-Spannung des MOSFET-Transistors 472 und der Spannung U_Soll ist umso geringer, je höher die Verstärkung des Verstärkers 470 ist. Die Schwellspannung des MOSFET-Transistors 472 wirkt sich bei hohen Verstärkungen kaum auf die Drain-Source-Spannung des MOSFET-Transistor 472 aus. Bei der Anwendung als Schaltung zur Spannungsklammerung wird damit der Einfluss des negativen Temperaturkoeffizienten der MOSFET-Schwellspannung auf die Klammerspannung unterdrückt. Die bei der Spannungsklammerung im MOSFET-Transistor 472 umgesetzte Verlustleistung bewirkt deshalb nahezu keine Reduktion der Klammerspannung, was im Falle einer Parallelschaltung von Schaltungen zur Spannungsklammerung eine thermische Mitkopplung weitgehend unterdrückt.

Die Spannungsvorgabe U_Soll 474 kann hier entweder konstant sein oder mit der Zeit zunehmen, also einen rampenförmigen Verlauf aufweisen. Durch die Anwendung eines rampenförmigen Verlaufs von U_Soll ist es möglich diese Ausführungsform des Verfahrens mit der erstgenannten Ausführungsform des Verfahrens zu kombinieren. Die Umsetzung dieses verbesserten Verfahrens zur Klammerspannungsregelung und auch die Bereitstellung rampenförmiger Führungsgrößen für die Klammerspannung kann beispielsweise als diskrete Schaltungen oder durch die Integration der Komponenten in einen ASIC oder auch überwiegend Digital z. B. durch die Anwendung von Mikrocontrollern oder FPGAs erfolgen.

Vorteile gegenüber dem Stand der Technik sind:

- die weitgehende Gleichverteilung der Verlustleistung während der Spannungsklammerung in einem Lastabwurf-Ereignis,

- die Vermeidung des Avalanche-Betriebs von MOSFET-Transistoren im Lastabwurf-Ereignis,

- die Aufrechterhaltung der Spannungsversorgung im Lastabwurf-Ereignis,

- der Verzicht auf komplexe Leistungshalbleitertechnologien mit thermisch gekoppelten, integrierten Zenerdioden oder integrierten Temperatursensoren.

Die Wirksamkeit der beschriebenen Maßnahme kann anhand von Simulationen nachgewiesen werden.

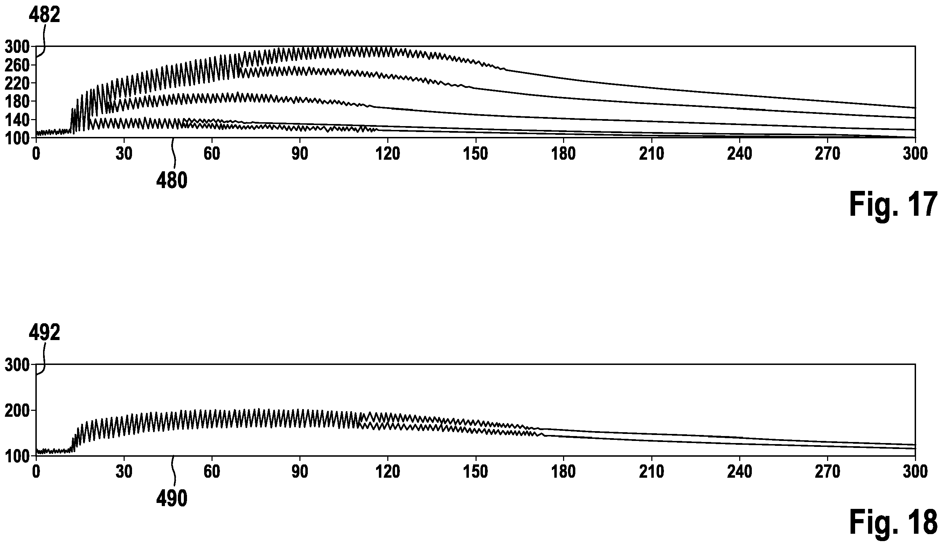

Figur 17 zeigt die simulierten Temperaturverläufe der MOSFET-Transistoren der sechs Schaltzweige eines Gleichrichters im Betrieb mit einem dreiphasigen Generator für ein Lastabwurf-Ereignis. Die vorgenannten Verfahren zur Gleichverteilung der Verlustleistung sind hierbei nicht angewendet, da ein Schaltungsprinzip gemäß Figur 3 angewendet wird. In Figur 17 ist an einer Abszisse 480 die Zeit in ms und an einer Ordinate 482 die Temperatur T aufgetragen.

Figur 18 zeigt die simulierten Temperaturverläufe der MOSFET-Transistoren der sechs Schaltzweige eines Gleichrichters im Betrieb mit einem dreiphasigen Generator für ein Lastabwurf-Ereignis. Hierbei wird das vorgenannte Verfahren zur Klammerspannungsregelung gemäß dem in Figur 16 dargestellten Schaltungsprinzip angewendet. In Figur 18 ist an einer Abszisse 490 die Zeit in ms und an einer Ordinate 492 die Temperatur T aufgetragen.

An Figur 18 ist deutlich zu erkennen, dass aufgrund der Anwendung des vorgenannten Verfahrens zur Klammerspannungsregelung bei ansonsten gleichen Randbedingungen die Bandbreite der Endstufentemperaturen deutlich enger ist. Damit ergibt sich für die einzelnen MOSFET-Transistoren eine geringere Maximaltemperatur.

**Patentansprüche**

1. Verfahren zum Ansteuern eines Brückengleichrichters (10) mit aktiven Schaltelementen (40, 42, 50, 52, 60, 62), **dadurch gekennzeichnet, dass** die aktiven Schaltelemente (40, 42, 50, 52, 60, 62) während der Spannungsklammerung bei Lastabwurf so angesteuert werden, dass sich die Klammerspannung in jedem Schaltzweig (30, 32, 34) innerhalb jeder Halbperiode des gleichzurichtenden Stromes gemäß einer zeitabhängig vorgegebenen rampenförmigen Änderung einer Signalform verhält.

2. Verfahren nach Anspruch 1, bei dem die Klammerspannung in jedem Schaltzweig (30, 32, 34) mit jeweils einem Regler auf die vorgegebene Signalform geregelt wird.

3. Verfahren nach einem der Ansprüche 1 oder 2, bei dem eine thermische Kopplung zwischen einem Leistungsschalter und mindestens einer Zenerdiode vorgenommen wird.

4. Verfahren nach den Ansprüchen 1 bis 3, bei dem jedes Schaltelement aus mindestens einem MOSFET-Transistor (102, 472) besteht.

5. Verfahren nach den Ansprüchen 3 und 4, bei dem jeder MOSFET-Transistor (102, 472) zusammen mit mindestens einer Zenerdiode monolithisch integriert ist.

6. Verfahren nach Anspruch 4 oder 5, bei dem jeder MOSFET-Transistor (102, 472) als Vierpol angesteuert wird.

7. Ansteuerschaltung zum Ansteuern der aktiven Schaltelemente (40, 42, 50, 52, 60, 62) eines Gleichrichter, die zur Durchführung eines Verfahrens nach einem der Ansprüche 1 bis 6 ausgebildet ist.

8. Ansteuerschaltung nach Anspruch 7, die einen Regler zur Regelung von Steuersignalen für die aktiven Schaltelemente (40, 42, 50, 52, 60, 62) umfasst.

9. Gleichrichter mit aktiven Schaltelementen (40, 42, 50, 52, 60, 62), die jeweils mit einem Steuersignal zu beaufschlagen sind, insbesondere zur Durchführung eines Verfahrens nach einem der Ansprüche 1 bis 6, mit einer Ansteuerschaltung (14) nach Anspruch 7 oder 8.

10. Elektrischer Generator mit einem Gleichrichter (12) nach Anspruch 9.

**Claims**

1. Method for driving a bridge rectifier (10) with active switching elements (40, 42, 50, 52, 60, 62), **characterized in that** the active switching elements (40, 42, 50, 52, 60, 62) are driven during the voltage clamping in the case of load shedding such that the clamping voltage in each switching branch (30, 32, 34) within each half-cycle of the current to be rectified behaves in accordance with a time-dependently predefined ramped change in a signal waveform.

2. Method according to Claim 1, wherein the clamping voltage in each switching branch (30, 32, 34) is regulated to the predefined signal waveform by a respective regulator.

3. Method according to either of Claims 1 and 2, wherein a thermal coupling between a power switch and at least one Zener diode is effected.

4. Method according to Claims 1 to 3, wherein each switching element consists of at least one MOSFET transistor (102, 472).

5. Method according to Claims 3 and 4, wherein each MOSFET transistor (102, 472) is monolithically integrated together with at least one Zener diode.

6. Method according to Claim 4 or 5, wherein each MOSFET transistor (102, 472) is driven as a four-terminal network.

7. Drive circuit for driving the active switching elements (40, 42, 50, 52, 60, 62) of a rectifier, which drive circuit is configured for carrying out a method according to any of Claims 1 to 6.

8. Drive circuit according to Claim 7, which comprises a regulator for regulating control signals for the active switching elements (40, 42, 50, 52, 60, 62).

9. Rectifier with active switching elements (40, 42, 50, 52, 60, 62), to each of which a control signal is to be applied, in particular for carrying out a method according to any of Claims 1 to 6, with a drive circuit (14) according to Claim 7 or 8.

10. Electrical generator with a rectifier (12) according to Claim 9.

**Revendications**

1. Procédé d'excitation d'un redresseur en pont (10), comprenant des éléments de commutation actifs (40, 42, 50, 52, 60, 62), **caractérisé en ce que** les éléments de commutation actifs (40, 42, 50, 52, 60, 62) sont excités pendant le verrouillage de tension en cas de délestage de telle sorte que la tension de verrouillage dans chaque branche de commutation (30, 32, 34), à l'intérieur de chaque demi-période du courant à redresser, se comporte selon une modification linéaire d'une forme de signal, spécifiée en fonction du temps.

2. Procédé selon la revendication 1, dans lequel la tension de verrouillage est régulée dans chaque branche de commutation (30, 32, 34) par respectivement un régulateur selon la forme de signal spécifiée.

3. Procédé selon l'une quelconque des revendications 1 ou 2, dans lequel un couplage thermique entre un disjoncteur et au moins une diode Zener est effectué.

4. Procédé selon l'une quelconque des revendications 1 à 3, dans lequel chaque élément de commutation est composé d'au moins un transistor MOSFET (102, 472).

5. Procédé selon l'une quelconque des revendications 3 et 4, dans lequel chaque transistor MOSFET (102, 472) est intégré de manière monolithique avec au moins une diode Zener.

6. Procédé selon la revendication 4 ou 5, dans lequel chaque transistor MOSFET (102, 472) est excité en quadripôle.

7. Circuit d'excitation permettant d'exciter les éléments de commutation actifs (40, 42, 50, 52, 60, 62) d'un redresseur, réalisé pour effectuer un procédé selon l'une quelconque des revendications 1 à 6.

8. Circuit d'excitation selon la revendication 7, comprenant un régulateur pour réguler des signaux de commande pour les éléments de commutation actifs (40, 42, 50, 52, 60, 62).

9. Redresseur, comprenant des éléments de commutation actifs (40, 42, 50, 52, 60, 62) à solliciter respectivement avec un signal de commande, en particulier pour effectuer un procédé selon l'une quelconque des revendications 1 à 6, avec un circuit d'excitation (14) selon la revendication 7 ou 8.

10. Générateur électrique, comprenant un redresseur (12) selon la revendication 9.

Fig. 1

EP 2 692 046 B1

Neue Fig. 2

Fig. 3

Fig. 4

Fig. 5

Fig. 6

Fig. 7

Fig. 8

Fig. 9

EP 2 692 046 B1

Fig. 10

EP 2 692 046 B1

Fig. 11

222

220

4.8 4.4 4.0 3.6 3.2 2.8 2.4 2.0 1.6 1.2 0.8 0.4

Fig. 12

Fig. 13

Fig. 14

EP 2 692 046 B1

Fig. 15

**Fig. 16**

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007048761 A2
- DE 10260650 A1
- DE 102008036114 A1
- DE 102007060219 A1